# EUROPÄISCHE PATENTSCHRIFT

(11) **EP 2 946 988 B1**
(45) Veröffentlichungstag und Bekanntmachung des Hinweises auf die Patenterteilung: **13.06.2018**
(21) Anmeldenummer: 15165620.4
(22) Anmeldetag: 29.04.2015
(51) Int. Cl.: B62D 25/16, F16B 5/02, B60R 19/24

(54) **BAUTEILGRUPPE ZUM ZUSAMMENFÜGEN VON FAHRZEUGTEILEN**
COMPONENT GROUP FOR JOINING TOGETHER VEHICLE PARTS
COMPOSANT D'ASSEMBLAGE DE PIÈCES DE VÉHICULE

(30) Priorität: 22.05.2014 DE 102014209759
(43) Veröffentlichungstag der Anmeldung: 25.11.2015
(73) Patentinhaber: Ford Global Technologies, LLC, Dearborn, MI 48126 (US)
(72) Erfinder: Niessen, Bert, 52396 Heimbach (DE); Schwarz, Frank, 50737 Köln (DE); Albrecht, Michael, 53125 Bonn (DE); Schmidt-Soltau, Achim, 41542 Dormagen (DE); Edelhoff, Gregor, 53797 Lohmar (DE)
(74) Vertreter: Dörfler, Thomas

(56) Entgegenhaltungen:
- DE-A1-102011 011 815
- DE-C1- 3 304 569
- DE-U1-202009 006 999

## Beschreibung

Die Erfindung betrifft eine Bauteilgruppe zum Zusammenfügen von Fahrzeugteilen, insbesondere von Fahrzeugverkleidungsteilen, wie beispielsweise Motorhaube, Stoßfänger, Kühlergrill bzw. Kühlergitter etc., die beim Zusammenbau relativ zueinander ausgerichtet, justiert und befestigt werden müssen, bestehend aus mindestens zwei Bauteilen, die an den miteinander zu verbindenden Fahrzeugteilen befestigbar und relativ zueinander verschiebbar und nach der Justage aneinander fixierbar sind, wobei die beiden Bauteile über eine Ratschenverzahnung ineinandergreifen, quer zu den Ratschenzähnen zum Zweck der Justierung relativ zueinander verschiebbar sind und nach der Justierung der zusammenzufügenden Fahrzeugteile fest und unverschieblich miteinander verbindbar sind.

Es sind bereits verschiedene Methoden bekannt, wie bei der Montage von Fahrzeugverkleidungsteilen Herstellungs- und Montagetoleranzen ausgeglichen werden können. Bei einer bekannten Methode der genannten Art (DE 10 2010 050 515 A1) sind mehrere Befestigungsstellen mit Durchbrüchen zur Aufnahme von Ausricht- oder Befestigungsmitteln, insbesondere von Schweißbolzen, Schrauben oder Nieten, vorgesehen, wobei die Befestigungsstellen rastend zwischen mehreren Lagen in Bezug auf die eingesetzten Ausricht- oder Befestigungsmittel bewegbar sind, um eine Justage des Fahrzeugverkleidungsteils in Bezug auf die Anbaustelle am Fahrzeug zu ermöglichen. Die Verrastung erfolgt dabei durch die Form der Durchbrüche, die die Gestalt einer Reihe überlappender runder Bohrungen aufweisen. Mindestens einer der Durchbrüche weist dabei einen Abschnitt mit vergrößertem Durchmesser auf, der den Durchtritt des Kopfteils eines am Fahrzeug ausgebildeten oder vormontierten Ausrichtmittels ermöglicht.

Diese bekannte Methode ist nicht nur aufwendig und unbequem, sondern stellt auch im Hinblick auf das an dem Fahrzeug vorgesehene oder gesondert anzubringende Ausrichtmittel einen erheblichen Aufwand dar. Auch sind bei dieser bekannten Methode Feineinstellungen nicht möglich.

Aus der DE 20 2009 006 999 U1 ist eine Befestigungsvorrichtung zur Positionierung eines Bauteils an einem Träger bekannt, wobei an dem Bauteil eine mehrere Rastkanten aufweisende Lasche angeordnet ist, während der Träger eine korrespondierende, mit mindestens einem Rastelement kombinierte Aufnahmeöffnung für die Lasche aufweist. Die Rastkanten verlaufen quer zu der Montagerichtung und weisen ein Zahnprofil auf. Das Befestigungsprinzip beruht dabei darauf, dass die Lasche durch eine in dem Träger vorgesehene Aufnahmeöffnung geschoben wird. Die Aufnahmeöffnung ist mit einem eigenen Rastelement kombiniert, das in die Rastkanten der Lasche eingreift. Dieses bekannte Befestigungs- bzw. Positionierungsprinzip erlaubt zwar eine Relativbewegung zwischen den zueinander zu positionierenden Bauteilen in Montagerichtung, jedoch ist bei diesem Prinzip keine Verschiebung in einer genau geradlinigen Richtung möglich, denn es kann auch zu ungewollten seitlichen Verschiebungen der beiden relativ zueinander bewegbaren Bauteilen kommen.

Aus der DE 33 04 569 C1 ist das Einstellen eines Türaußenteils eines Fahrzeugs relativ zu dem Türkörper bekannt, wobei ein Stellblock in einem Käfig in verschiedene Richtungen bewegt und über geringe Distanzen nachgestellt werden kann. Eine geradlinige Nachstellung auch über größere Distanzen in sehr genauer geradliniger Ausrichtung ist mit dieser bekannten Einrichtung nicht möglich.

Ferner ist aus der DE 10 2011 011 815 A1 eine Halteanordnung eines Anbauteils an einem Kraftwagenteil bekannt, wobei eine sogenannte Vorfixiereinrichtung zwischen den beiden Bauteilen vorgesehen ist. Die Vorfixiereinrichtung besteht aus einem ersten Bauteil mit einem Aufnahmeraum, der auf gegenüberliegenden Seiten mit Rastelementen versehen ist. Das zweite Bauteil ist mit zwei Federarmen versehen, die auf ihren einander abgewandten Seiten ebenfalls mit Rastelementen versehen sind und die mit den Rastelementen des ersten Bauteils zusammenwirken. Das zweite Bauteil ist aus elastischem Kunststoff hergestellt, sodass die relativ dünn ausgebildeten Federarme auslenkbar sind. Jedoch ist mit dieser bekannten Vorfixiereinrichtung keine präzise, geradlinige Verstellung möglich.

Der Erfindung liegt die Aufgabe zugrunde, eine Methode zu schaffen, die ein einfaches, schnelles und zuverlässiges Ausrichten von Fahrzeugteilen relativ zueinander in einer genau vorgegebenen Richtung ermöglicht, wobei insbesondere Feineinstellungen ohne größeren Aufwand und mit großer Präzision realisiert werden sollen.

Erfindungsgemäß wird diese Aufgabe dadurch gelöst, dass eines der beiden Bauteile als Basisteil ausgebildet ist, welches mittels einer ersten Schraube fest mit dem Fahrzeugkorpus verbindbar ist, dass das andere Bauteil als Justierteil ausgebildet ist, an welchem das zu justierende Fahrzeugteil befestigbar bzw. mit diesem einstückig ausgebildet ist, dass das Justierteil mit einem Ratschenschuh versehen ist, dass das Justierteil mittels eines Ratschenschuhs, der in einem Aufnahmekanal des Basisteils verschiebbar ist, relativ zu dem Basisteil geführt ist, und dass in dem Justierteil ein Langloch vorgesehen ist, durch welches eine zweite Schraube hindurch in eine Bohrung des Basisteils eindrehbar ist, um das Justierteil verstellbar an dem Basisteil befestigen zu können.

Diese Merkmalskombination ermöglicht auf sehr einfache Weise zuverlässige Voreinstellungen, sobald sich die Verkleidungsteile relativ zueinander stabilisiert haben. Auch ist es aufgrund der leichten Zugänglichkeit der erfindungsgemäßen Bauteile auch im Nachhinein noch möglich, beliebige Nachjustierungen vorzunehmen. Die genaue Justierung der beiden Bauteile relativ zueinander wird insbesondere durch den in dem Aufnahmekanal geführten Ratschenschuh ermöglicht, sodass eine genaue, linear ausgerichtete Verschiebung der Bauteile gewährleistet ist.

Vorzugsweise sind sowohl in dem Aufnahmekanal des Basisteils als auch an dem Ratschenschuh des Justierteils ineinandergreifende Ratschenverzahnungen vorgesehen. Dabei ist zweckmäßig mindestens eines der beiden Bauteile aus elastisch verformbarem Kunststoff hergestellt, sodass das Aufnahmeteil des Basisteils den Ratschenschuh des Justierteils um mehr als 180° etwas formschlüssig umgeben kann.

Da also mindestens eines der beiden Bauteile aus elastisch verformbarem Kunststoff besteht, lassen sich die Ratschenverzahnungen der beiden ineinandergreifenden Bauteile unter leichter Verformung von mindestens einem der beiden Bauteile problemlos in Montagerichtung verschieben. Gleichzeitig gewährleisten die Spannkräfte in der Ratsche einen ausreichenden Halt und verhindern ein Trennen der beiden Ratschenhälften durch gravitative Kräfte.

Die Ratschenverzahnung kann dabei beliebig klein gewählt werden, wobei die Abstände der Ratschenzähne vorzugsweise in der Größenordnung von 0,5 mm liegen. Kleinere Schrittweiten können realisiert werden, durch z.B. Versatz der Zähne zueinander oder Einbringen von kleineren Zähnen auf einer oder beiden Anlageflächen.

Mit der erfindungsgemäßen Methode lassen sich sehr zuverlässige Voreinstellungen auf sehr einfache Weise ermöglichen, sobald sich die Verkleidungsteile relativ zueinander stabilisiert haben. Auch ist es aufgrund der leichten Zugänglichkeit der erfindungsgemäßen Bauteile immer noch möglich, im Nachhinein Nachjustierungen vorzunehmen.

An seiner Oberseite weist der Aufnahmekanal zweckmäßig einen durchgehenden Längsspalt auf, während der Ratschenschuh des Justierteils an korrespondierender Stelle mit mindestens einer Längsrippe versehen ist, die bei eingeschobenem Ratschenschuh aus dem Längsspalt des Aufnahmekanals herausragt.

Die Ratschenverzahnung des Aufnahmekanals ist zweckmäßig auf der dem Längsspalt gegenüberliegenden Grundfläche angeordnet, sodass die einzelnen feinen Ratschenzähne eine ausreichende Breite aufweisen, um einen guten Halt zwischen Aufnahmekanal und Ratschenschuh zu gewährleisten.

Der Querschnitt des Aufnahmekanals, der den Ratschenschuh des Justierteils um mehr als 180° formschlüssig umgibt, ist vorzugsweise rechteckig ausgebildet, wodurch eine besonders gute Führung gewährleistet ist. Der Querschnitt des Aufnahmekanals kann aber auch jede andere Form aufweisen.

Die Erfindung ist in der Zeichnung beispielhaft dargestellt und im Einzelnen anhand der Zeichnung beschrieben. Es zeigen:
- Fig. 1:: einen Ausschnitt aus einem Fahrzeugbereich unterhalb der Motorhaube,
- Fig. 2:: einen Schnitt entlang der Linie II-II aus Fig. 1,
- Fig. 3:: einen Schnitt entlang der Linie III-III aus Fig. 1,
- Fig. 4:: eine Darstellung des Basisteils als Draufsicht und
- Fig. 5:: eine Darstellung des Justierteils, ebenfalls als Draufsicht.

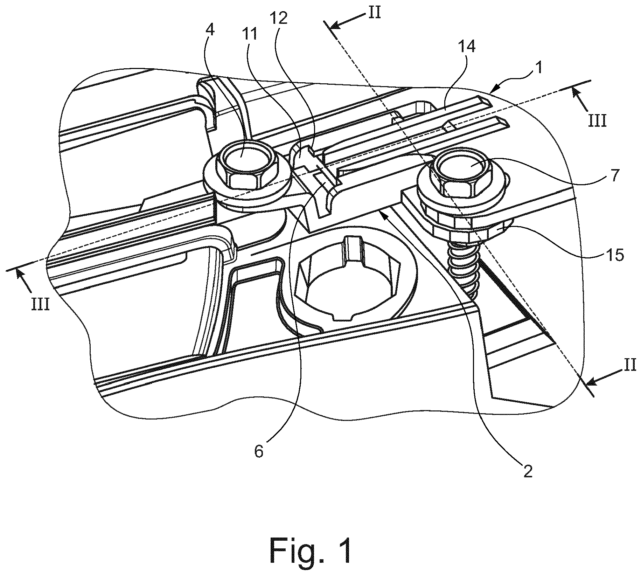

In Fig. 1 der Zeichnung ist die erfindungsgemäße Bauteilgruppe dargestellt, mit der einzelne Fahrzeugverkleidungsteile relativ zueinander ausgerichtet, justiert und an dem Fahrzeugkorpus befestigt werden können.

Diese Bauteilgruppe besteht aus einem Justierteil 1, welches mittels Schrauben, Nieten oder dergleichen an dem zu justierenden Fahrzeugteil befestigt ist, sowie einem Basisteil 2, welches fest mit dem Fahrzeugkorpus 3 verbunden ist, wobei das Justierteil 1 bevorzugt im justierenden Fahrzeugteil integriert ist. Die Verbindung zwischen Basisteil 2 und Fahrzeugkorpus 3 erfolgt bei dem in der Zeichnung dargestellten Basisteil 2 Ausführungsbeispiel mittels einer Schraube 4, die durch ein in dem Basisteil 2 vorgesehene Bohrung 5 hindurchgreift und in den Fahrzeugkorpus 3 eingeschraubt wird.

Das Justierteil 1 und das Basisteil 2 sind einerseits über eine Ratschenverzahnung 6 verschieblich miteinander verbunden und andererseits über eine Schraube 7, die sowohl durch das Justierteil 1 als auch durch das Basisteil 2 hindurchgreift, fest miteinander verbindbar.

Die Ratschenverzahnung 6, die zwischen dem Justierteil 1 und dem Basisteil 2 angeordnet ist und eine gezielte Verschiebung der beiden Teile relativ zueinander ermöglicht, ist einerseits in einem Aufnahmekanal 8 des Basisteils 2 und andererseits an einem Ratschenschuh 9 des Justierteils 1 ausgebildet.

Der Aufnahmekanal 8 wird durch die Oberfläche 10 des Basisteils 2, zwei von der Oberfläche 10 sich senkrecht nach oben erstreckende, im Abstand voneinander angeordnete Seitenwände 11 sowie an den oberen Enden der Seitenwände 11 nach innen vorspringende Klauen 12 gebildet. Zwischen den inneren Stirnenden der Klauen 12 verbleibt ein durchgehender Längsspalt 13, sodass der Aufnahmekanal 8 in seinem mittleren Bereich nach oben hin offen ist.

Der durch die Oberfläche 10 des Basisteils 2, die beiden Seitenwände 11 sowie die nach innen gerichteten Klauen 12 gebildete Aufnahmekanal 8 weist einen im Wesentlichen rechteckigen Querschnitt auf, der zur Aufnahme des entsprechend ausgebildeten Ratschenschuhs 9 dient.

Am Grunde des Aufnahmekanals 8, der durch die Oberfläche 10 des Basisteils 2 gebildet wird, ist die eine Hälfte der Ratschenverzahnung 6 angeordnet, wobei die Zähne quer zur Längsrichtung des Aufnahmekanals 8 verlaufen.

Der Ratschenschuh 9 ist dem rechteckigen Querschnitt des Aufnahmekanals 8 angepasst und ist an seiner der Oberfläche 10 des Basisteils 2 zugewandten Seite mit der zweiten Hälfte der Ratschenverzahnung 6 versehen.

Auf der der Ratschenverzahnung 6 gegenüberliegenden Seite ist der Ratschenschuh 9 mit zwei in Längsrichtung des Ratschenschuhs 9 parallel verlaufenden Längsrippen 14 versehen, die nach außen durch den Längsspalt 13 des Aufnahmekanals 8 herausragen und insbesondere zur Aussteifung des Ratschenschuhs 9 dienen.

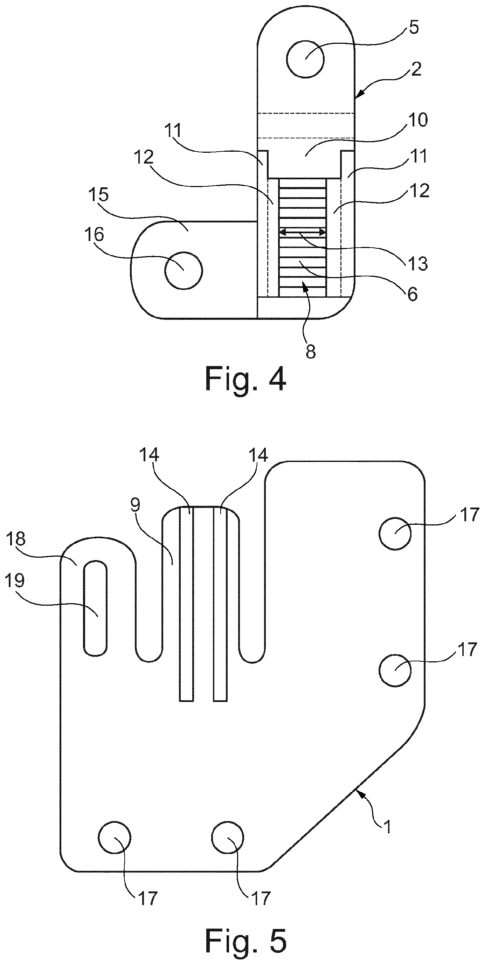

In Fig. 4 ist das Basisteil 2 in Draufsicht dargestellt, wobei der durch die Oberfläche 10 des Basisteils 2, die Seitenwände 11 sowie die nach innen vorspringenden Klauen 12 gebildete Aufnahmekanal 8 gut zu erkennen ist. Am Grunde des Aufnahmekanals 8 ist die Ratschenverzahnung 6 zu sehen, wobei die einzelnen Ratschenzähne quer durch den Aufnahmekanal 8 verlaufen.

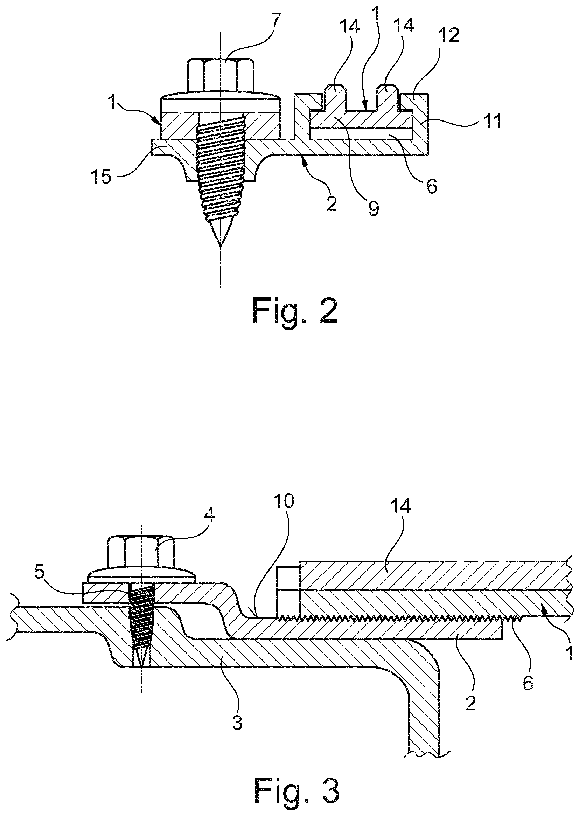

Im oberen Teil in Fig. 4 ist die Bohrung 5 zu erkennen, durch die die in Fig. 2 dargestellte Schraube 4 hindurchgreift, um das Basisteil 2 an dem Fahrzeugkorpus 3 zu befestigen.

Wie weiterhin aus Fig. 4 zu erkennen ist, ist das längliche Basisteil 2 mit einer flachen seitlichen Zunge 15 versehen, in der eine Bohrung 16 ausgebildet ist, um das Justierteil 1 mittels der Schraube 7 fest mit dem Basisteil 2 zu verbinden.

In Fig. 5 ist eine Draufsicht auf das Justierteil 1 dargestellt. Das Justierteil 1 wird mittels Schrauben, Nieten oder dergleichen, die durch entsprechende Befestigungsbohrungen 17 hindurchgreifen, an dem zu justierenden Fahrzeugverkleidungsteil befestigt. Statt der Befestigung am Fahrzeugverkleidungsteil kann das Justierteil auch als integriertes Teil des Fahrzeugverkleidungsteils ausgestaltet werden.

Etwa im mittleren Bereich des Justierteils 1 ist der Ratschenschuh 9 zu erkennen, dessen Höhe und Breite den Abmessungen des in dem Basisteil 2 ausgebildeten Aufnahmekanals 8 angepasst ist. Auf seiner in der Zeichnung nicht erkennbaren Unterseite ist der Ratschenschuh 9 mit seiner entsprechenden Ratschenverzahnung 6 versehen, die, wenn der Ratschenschuh 9 in den Aufnahmekanal 8 des Basisteils 2 eingeführt ist, in die Ratschenverzahnung 6 des Aufnahmekanals eingreift.

Die Ratschenverzahnung 6 kann beliebig gewählt werden. Um jedoch eine genaue Einstellung zu erzielen, werden die Zahnabstände relativ kurz gewählt, sodass zum Teil nur Zahnabstände von ca. 0,5 mm verwirklicht sind.

Sowohl das Justierteil 1 als auch das Basisteil 2 bestehen aus handelsüblichem, leicht elastisch verformbarem Kunststoff, sodass sich der Ratschenschuh 9 unter minimaler Aufweitung des Aufnahmekanals 8 mit etwas Druck in dem Aufnahmekanal 8 hin- und herschieben lässt, wobei die Ratschenverzahnung 6 jeweils von Zahn zu Zahn weiterspringt. Dadurch wird ein gewisser Halt zwischen dem Justierteil 1 und dem Basisteil 2 erzeugt, sodass auch bereits ohne die endgültige Fixierung mittels der Schraube 7 ein relativ fester Sitz erzeugt wird, der die Montage stark erleichtert.

In Fig. 5 ist auf der linken Seite eine an dem Justierteil 1 vorgesehene Montagezunge 18 zu erkennen, in der ein parallel zu der Längsachse des Ratschenschuhs 9 verlaufendes Langloch 19 ausgebildet ist.

Beim Einsetzen des Ratschenschuhs 9 in den Aufnahmekanal 8 schiebt sich die Montagezunge 18 über die an dem Basisteil 2 vorgesehene seitliche Zunge 15, sodass das Langloch 19 mit der Bohrung 16 zur Deckung gebracht werden kann.

Wenn schließlich die Justierung abgeschlossen ist, wird die Schraube 7 durch das Langloch 19 hindurch in die Bohrung 16 des Basisteils 2 eingeschraubt, sodass die relative Stellung zwischen Justierteil 1 und Basisteil 2 fixiert werden kann.

Wenn sich nach der Montage herausstellt, dass die Justierung noch nicht optimal ist, so kann die Schraube 7 etwas gelöst werden, und es kann eine Nachjustierung erfolgen, bis eine optimale Relativstellung der zueinander zu justierenden Fahrzeugteile erreicht ist. Anschließend wird die Schraube 7 dann wieder festgezogen, sodass das Justierteil 1 fest und unverschieblich mit dem Basisteil 2 verbunden ist.

In der Praxis werden das Justierteil 1 und das Basisteil 2 mit Hilfe der Schrauben 4 und 7 vormontiert. Wenn dann die endgültige Justierung erfolgen soll, wird die Schraube 7, die das Justierteil 1 mit dem Basisteil 2 verbindet, gelöst, um die Teile relativ zueinander verschieben zu können. Wenn beispielsweise ein Stoßfänger justiert werden soll, wird der Übergang des Stoßfängers zur Motorhaube gegen einen auf der geschlossenen Motorhaube befestigten Prozessabstandshalter geschoben, und nach dem Öffnen der Motorhaube kann dann die Schraube 7 wieder festgezogen werden, um den eingestellten Zustand zu fixieren.

Durch den Einsatz der Ratschenverzahnung 6 und durch die Auswahl eines optimales Zahnabstandes können beste Toleranzen des Hauben-/Stoßfängerspalts ermöglicht werden.

Die erfindungsgemäße Bauteilgruppe kann überall dort eingesetzt werden, wo bei der Montage von Fahrzeugen Fahrzeugverkleidungsteile relativ zueinander ausgerichtet, justiert und befestigt werden müssen.

### Bezugszeichenliste

- 1: Justierteil
- 2: Basisteil
- 3: Fahrzeugkorpus
- 4: Schraube
- 5: Bohrung
- 6: Ratschenverzahnung
- 7: Schraube
- 8: Aufnahmekanal
- 9: Ratschenschuh
- 10: Oberfläche
- 11: Seitenwände
- 12: Klauen
- 13: Längsspalt
- 14: Längsrippen
- 15: seitliche Zunge
- 16: Bohrung
- 17: Befestigungsbohrungen
- 18: Montagezunge
- 19: Langloch

## Patentansprüche

1. Bauteilgruppe zum Zusammenfügen von Fahrzeugteilen, insbesondere von Fahrzeugverkleidungsteilen, die beim Zusammenbau relativ zueinander ausgerichtet, justiert und befestigt werden müssen, bestehend aus mindestens zwei Bauteilen, die an den miteinander zu verbindenden Fahrzeugteilen befestigbar und relativ zueinander verschiebbar und nach der Justage aneinander fixierbar sind, wobei die beiden Bauteile über eine Ratschenverzahnung (6) ineinandergreifen, quer zu den Ratschenzähnen zum Zweck der Justierung relativ zueinander verschiebbar sind und nach der Justierung der zusammenzufügenden Fahrzeugteile fest und unverschieblich miteinander verbindbar sind, **dadurch gekennzeichnet,**
- **dass** eines der beiden Bauteile als Basisteil (2) ausgebildet ist, welches mittels einer ersten Schraube (4) fest mit dem Fahrzeugkorpus (3) verbindbar ist,
- **dass** das andere Bauteil als Justierteil (1) ausgebildet ist, an welchem das justierenden Fahrzeugteil befestigbar bzw. mit diesem einstückig ausgebildet ist,
- **dass** das Justierteil (1) mit einem Ratschenschuh (9) versehen ist,
- **dass** das Justierteil (1) mittels seines Ratschenschuhs (9), der in einem Aufnahmekanal (9) des Basisteils (2) verschiebbar ist, relativ zu dem Basisteil (2) geführt ist, und
- **dass** in dem Justierteil (1) ein Langloch (19) vorgesehen ist, durch welches eine zweite Schraube (7) hindurch in eine Bohrung (16) des Basisteils (2) eindrehbar ist, um das Justierteil (1) verstellbar an dem Basisteil (2) befestigen zu können.

2. Bauteilgruppe nach Anspruch 1,
**dadurch gekennzeichnet,**
- **dass** sowohl in dem Aufnahmekanal (8) des Basisteils (2) als auch an dem Ratschenschuh (9) des Justierteils (1) ineinandergreifende Ratschenverzahnungen (6) vorgesehen sind,
- **dass** mindestens eines der beiden Bauteile (1, 2) aus elastisch verformbarem Kunststoff besteht und
- **dass** der Aufnahmekanal (8) des Basisteils (2) den Ratschenschuh (9) des Justierteils (1) um mehr als 180° etwa formschlüssig umgibt.

3. Bauteilgruppe nach Anspruch 2,
**dadurch gekennzeichnet,**
- **dass** der Aufnahmekanal (8) an seiner Oberseite einen durchgehenden Längsspalt (13) aufweist und
- **dass** der Ratschenschuh (9) mit mindestens einer Längsrippe (14) versehen ist, die bei eingeschobenem Ratschenschuh (9) aus dem Längsspalt (13) des Aufnahmekanals (8) herausragt.

4. Bauteilgruppe nach Anspruch 3,
**dadurch gekennzeichnet,**
**dass** die Ratschenverzahnung (6) des Aufnahmekanals (8) auf der dem Längsspalt (13) gegenüberliegenden Grundfläche (10) angeordnet ist.

5. Bauteilgruppe nach einem der vorherigen Ansprüche,
**dadurch gekennzeichnet,**
**dass** der Querschnitt des Aufnahmekanals (8) etwa rechteckig ausgebildet ist.

## Claims

1. Component group for joining together vehicle parts, in particular vehicle trim parts which have to be aligned, adjusted and fastened relative to one another during assembly, consisting of at least two components which can be fastened to the vehicle parts to be connected together and which are able to be displaced relative to one another and which are able to be fixed to one another after adjustment, wherein the two components engage in one another via a ratchet toothing (6), are able to be displaced relative to one another transversely to the ratchet teeth for the purpose of adjustment and, after the adjustment of the vehicle parts to be joined together, are able to be fixedly and undisplaceably connected together,
- in that the adjustment part (1) is provided with a ratchet shoe (9),
- in that the adjustment part (1) is guided relative to the base part (2) by means of its ratchet shoe (9) which is able to be displaced in a receiver channel (9) of the base part (2), and
- in that a slot (19) is provided in the adjustment part (1), through which a second screw (7) is able to be screwed into a bore (16) of the base part (2) in order to be able to fasten the adjustment part (1) adjustably to the base part (2).

2. Component group according to Claim 1,
**characterized**
- **in that** ratchet toothings (6) which engage in one another are provided both in the receiver channel (8) of the base part (2) and on the ratchet shoe (9) of the adjustment part (1),
- **in that** at least one of the two components (1, 2) consists of resiliently deformable plastics material and
- **in that** the receiver channel (8) of the base part (2) encloses the ratchet shoe (9) of the adjustment part (1) by more than 180° in an approximately positive manner.

3. Component group as claimed in Claim 2,
**characterized**
- **in that** the receiver channel (8) has on its upper face a continuous longitudinal gap (13) and
- **in that** the ratchet shoe (9) is provided with at least one longitudinal rib (14) which protrudes from the longitudinal gap (13) of the receiver channel (8) when the ratchet shoe (9) is inserted.

4. Component group as claimed in Claim 3,
**characterized**
**in that** the ratchet toothing (6) of the receiver channel (8) is arranged on the bottom surface (10) opposing the longitudinal gap (13).

5. Component group as claimed in one of the preceding claims,
**characterized**
**in that** the cross section of the receiver channel (8) is configured to be approximately rectangular.

## Revendications

1. Groupe de composants pour l'assemblage de pièces de véhicule, en particulier de pièces d'habillage de véhicule, qui doivent être alignées, ajustées et fixées l'une par rapport à l'autre lors de l'assemblage, se composant d'au moins deux composants, qui peuvent être fixés aux pièces de véhicule à relier l'une à l'autre et qui peuvent se déplacer l'un par rapport à l'autre et qui peuvent être fixés l'un à l'autre après l'ajustage, dans lequel les deux composants s'engagent l'un dans l'autre au moyen d'une denture à rochet (6), sont déplaçables l'un par rapport à l'autre transversalement aux dents à rochet en vue de l'ajustage et peuvent être assemblés l'un à l'autre de façon fixe et solidaire après l'ajustage des pièces de véhicule à assembler, **caractérisé en ce que**
- un des deux composants constitue une pièce de base (2), qui peut être assemblée de façon fixe au corps de véhicule (3) au moyen d'une première vis (4),
- l'autre composant constitue une pièce d'ajustage (1), à laquelle la pièce de véhicule à ajuster peut être fixée ou qui peut être formée d'une pièce avec celle-ci,
- la pièce d'ajustage (1) est dotée d'une semelle de rochet (9),
- la pièce d'ajustage (1) est guidée par rapport à la pièce de base (2) au moyen de sa semelle de rochet (9), qui est déplaçable dans un canal de réception (8) de la pièce de base (2), et
- il est prévu dans la pièce d'ajustage (1) un trou oblong (19), à travers lequel une deuxième vis (7) peut être vissée dans un alésage (16) de la pièce de base (2), afin de pouvoir fixer la pièce d'ajustage (1) de façon réglable à la pièce de base (2).

2. Groupe de composants selon la revendication 1, **caractérisé en ce que**
- il est prévu aussi bien dans le canal de réception (8) de la pièce de base (2) que sur la semelle de rochet (9) de la pièce d'ajustage (1) des dentures à rochet (6) s'engageant l'une dans l'autre,
- au moins un des deux composants (1, 2) se compose d'une matière plastique élastiquement déformable, et
- le canal de réception (8) de la pièce de base (2) entoure environ par emboîtement sur plus de 180° la semelle de rochet (9) de la pièce d'ajustage (1).

3. Groupe de composants selon la revendication 2, **caractérisé en ce que**
- le canal de réception (8) présente sur son côté supérieur une fente longitudinale continue (13) et
- la semelle de rochet (9) est munie d'au moins une nervure longitudinale (14), qui sort de la fente longitudinale (13) du canal de réception (8) lorsque la semelle de rochet (9) est introduite.

4. Groupe de composants selon la revendication 3, **caractérisé en ce que** la denture à rochet (6) du canal de réception (8) est disposée sur la face de base (10) opposée à la fente longitudinale (13).

5. Groupe de composants selon l'une quelconque des revendications précédentes, **caractérisé en ce que** la section transversale du canal de réception (8) est de forme sensiblement rectangulaire.
